(19) **Europäisches Patentamt / European Patent Office / Office européen des brevets**

(11) **EP 4 730 695 A1**

(12) # EUROPEAN PATENT APPLICATION

(43) Date of publication:
22.04.2026 Bulletin 2026/17

(51) International Patent Classification (IPC):
**H04L 9/06** (2006.01)

(21) Application number: 25207862.1

(22) Date of filing: **10.10.2025**

(52) Cooperative Patent Classification (CPC):
**H04L 9/0637;** H04L 2209/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.10.2024 FR 2411177**
**31.03.2025 EP 25167471**

(71) Applicant: **STMicroelectronics International N.V.**
**1228 Plan-les-Ouates, Geneva (CH)**

(72) Inventor: **PEETERS, Rik**
**2840 RUMST (BE)**

(74) Representative: **Cabinet Beaumont**
**4, Place Robert Schuman**
**B.P. 1529**
**38025 Grenoble Cedex 1 (FR)**

(54) **PADDING DATA**

(57) The present disclosure relates to a method for generating a message (300) formed by one or several blocks of a first number of bytes, said message (300) comprising a first group of bytes (301) comprising data of said message (300) and a second group of bytes (302) corresponding to a padding data (302) of said message (300), wherein said padding data (302) comprises a first part of bits representing a random number and a second part of bits representing a result of the application of a function to the first length, wherein a second length of said second part of said padding data (302) is equal to the rounding of the logarithm base two of said first number.

Fig. 3

EP 4 730 695 A1

## Description

Technical field

The present disclosure relates generally to electronic systems and devices, and to their use of data. More precisely, the present disclosure concerns the management and the processing of data, for example the management of data during their encryption.

Background art

When electronic systems and devices need to use information, the format of these information is important in order to create a message. It is common to harmonize the format of messages by adding a padding data to a data representing information in a message.

It would be desirable to be able to improve, at least partly, certain aspects of the processing of data, and more particularly certain aspects of methods for padding data.

Summary of Invention

There is a need for a more efficient method for generating a padded message comprising a padding data.

There is a need for a more secure method for generating a message comprising a padding data.

There is a need for a more efficient method for generating a padding data including an information about the lengths of the padding data.

One embodiment addresses all or some of the drawbacks of known methods for generating a message comprising a padding data.

One embodiment provides a method for generating a message comprising a padding data.

One embodiment provides an electronic device capable of executing a method for generating a message comprising a padding data.

One embodiment provides a computer program product capable of executing a method for generating a message comprising a padding data.

One embodiment provides a method for generating a message formed by one or several blocks of a first number of bytes, said message comprising a first group of bytes comprising data of said message and a second group of bytes corresponding to a padding data of said message, wherein said padding data comprises a first part of bits representing a random number and a second part of bits representing a result of the application of a function to the first length, wherein a second length of said second part of said padding data is equal to the rounding of the logarithm base two of said first number.

One embodiment provides an electronic device capable of generating a message comprising a first group of bytes comprising data of said message and a second group of bytes corresponding to a padding data of said message, wherein said padding data comprises a first part of bits representing a random number and a second part of bits representing a result of the application of a function to the first length, wherein a second length of said second part of said padding data is equal to the rounding of the logarithm base two of said first number.

According to an embodiment, the second part of bits is placed at the end of the padding data.

According to an embodiment, said first number is a power of two.

According to an embodiment, when said first number is equal to eight, said second length of said second part of said padding data is equal to three.

According to an embodiment, wherein, when said first number is equal to sixteen, said second length of said second part of said padding data is equal to four.

According to an embodiment, when said first number is equal to thirty-two, said second length of said second part of said padding data is equal to five.

According to an embodiment, the padding data is placed at the end of said message.

According to an embodiment, said function is the sum of the first length of said padding data and of an integer modulo the first number.

According to an embodiment, said integer is equal to zero.

According to an embodiment, said integer is equal to minus one.

One embodiment provides a method for generating said second part of bits of said padding data previously described.

One embodiment provides a computer program product comprising instructions which, when the program is executed by a computer, cause the computer to execute the methods previously described.

One embodiment provides an encryption method comprising the method previously described.

One embodiment provides an encryption device comprising the device previously described.

Brief description of drawings

The foregoing features and advantages, as well as others, will be described in detail in the following description of specific embodiments given by way of illustration and not limitation with reference to the accompanying drawings, in which:

Figure 1 illustrates, in block form, an embodiment of an electronic device;

Figure 2 illustrates, schematically and in block form, an example of a message;

Figure 3 illustrates, schematically and in block form, an embodiment of a message; and

Figure 4 illustrates, schematically and in block form, an example of the embodiment of Figure 3.

Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

The described embodiments concern the management and the processing of messages comprising data when they are used in several situations. According to an example, when an electronic device needs to apply an algorithm, such as an encryption algorithm, some aspects of the format of the message may be standardized, such as the length of the message. In order to fulfill these requirements, it common to use a padding data in a message in order to increase the length of the message. The described embodiments concern a method for generating a message comprising a padding data. These embodiments also concern an electronic device and a computer program product both capable of executing such a method.

Moreover, the described embodiments are particularly adapted to be used in any kind of industrial markets where the use of a padding data is necessary in the processing of data. More particularly, such padding method and associated device can be intended for:

- the automotive industry, for example in the domain of car electrification or the domain of advanced driver assistance systems (ADAS);
- the industrial industry, for example in the domain of green energy, in the domain of electrification of infrastructure, of the internet of things (IoT), and of smart homes, wherein power and energy consumption and the exchange of data are key element;
- the personal electronics industry, for example in the domain of mobile phone and of the internet of things (IoT), and in the domain of high speed-interface; and
- the communications equipment, computers and peripherals industry, for example in the domain of infrastructure and data centers, and in the domain of satellites in low earth orbit.

Moreover, the described embodiments are particularly adapted to be used in any device using encryption method, such as an encryption method using cipher block chaining (CBC).

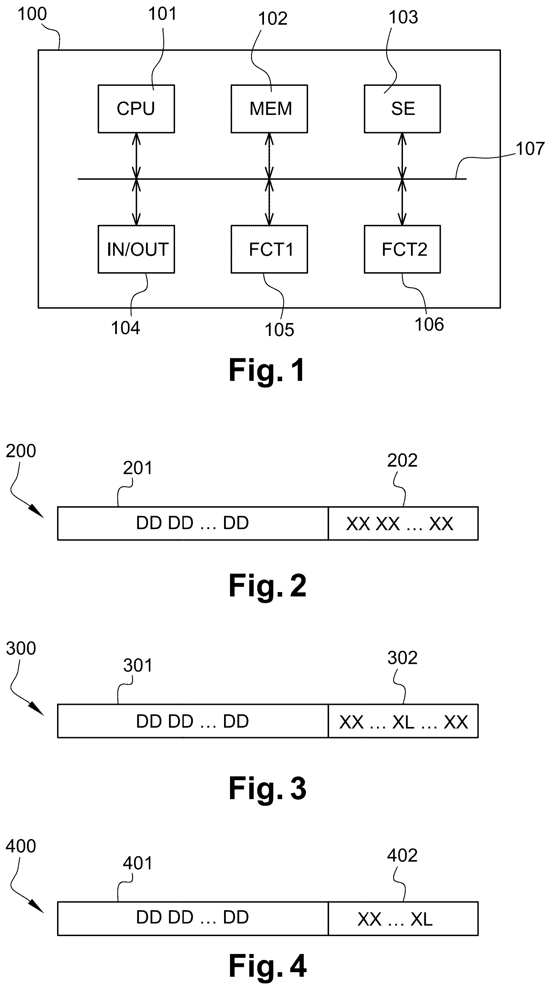

Figure 1 shows, very schematically and in block form, an electronic device 100 capable of implementing the method for generating a message comprising a padding data.

Device 100 is an electronic device adapted to processing information and data, in message form. The structure of a message according to an embodiment is described in relation with Figures 2 to 4.

Device 100 comprises a processor 101 (CPU) enabled to process data. According to an example, device 100 may comprise a plurality of processors, each adapted to processing different types of data. According to a specific example, device 100 may comprise at least one processor that is adapted to process data and to process padding data.

Device 100 further comprises one or a plurality of memories 102 (MEM) into which are stored data, for example, critical data. According to an example, device 100 comprises a plurality of types of memories, such as a ROM, a RAM a volatile memory, and/or a non-volatile memory.

Device 100 further comprises one or more secure element 103 (SE) adapted to processing critical and/or secret data. Secure element 103 may comprise its own processor(s), its own memory or memories, etc. Said one or more secure element 103 may be integrated to device 100, or embedded into device 100.

Device 100 further and optionally comprises one or a plurality of input/output circuits 104 (I/O) enabling device 100 to transmit and/or to receive data and/or energy with one or a plurality of external electronic devices.

Device 100 further comprises one or a plurality of circuits 105 (FCT1) and 106 (FCT2) implementing one or a plurality of functionalities of device 100. According to an example, circuits 105 and 106 may comprise specific data processing circuits, such as ciphering circuits, or circuits enabling to perform measurements, such as sensors.

Device 100 further comprises one or a plurality of communication buses 107 enabling all the circuits of device 100 to communicate. In Figure 1, a single bus 107 coupling processor 101, memory or memories 102, secure element 103, and circuits 104 to 106 is shown but in practice, device 100 comprises a plurality of communication buses coupling these different elements.

According to a particular example, the electronic device 100 is adapted to implement computer program products, and in particular a computer program product comprising instructions which, when the program is executed by a computer, cause the computer to execute the processing of data according to an embodiment.

According to a variant, electronic device 100 may be a less complex electronic device capable of implement the above-described embodiments. According to an embodiment, electronic device 100 may be a logical circuit, a controller, a Finite-State-Machine (FSM), or a Field Programmable Gate Array (FPGA).

Figure 2 represents, very schematically and in block form, an example of a padded message 200.

In the present disclosure, it is called a message or a data, a group of data bit representing an or several information. When the information of a data is programmed in hexadecimal, it is common to talk about the size of a message in terms of a number of bytes, one byte representing eight bits. Moreover, it is common to divide a message into same-size blocks of bytes. The size of a block of bytes is generally fixed by a communication protocol or an encryption algorithm.

In the present disclosure, it is called a padded message or a padded data, a message or a data comprising a padding data, meaning comprising several data bits only used to increase the length of the message or the data.

Message 200 comprising a data 201 (DD DD ... DD) representing information and a padding data 202 (XX XX ... XX). The length of message 200 is given by the number N, N being an integer, of bytes comprised in one of the blocks of bytes forming message 200 multiplied by the number of blocks forming message 200. It is defined a number Nd, Nd being an integer, of bytes of data 201 and the number Np, Np being an integer strictly greater than zero and lower or equal to number N, of bytes of the padding data 202. The sum of number Nd and Np is equal to a multiple of the number N.

For message 200, having a padding data is mandatory, thus the length Np is greater than zero. If the length Nd of data 201 is equal to the target size of the message 200, padding data 202 is still present in message 200 and its length Np is equal to the target size of the message 200. In that case, message 200 has a length that is equal to twice the target size.

In the example represented in figure 2, padding data 202 is placed at the end of the message 200. However, it is obvious for the person skilled in the art, that padding data may be placed in the beginning of message 200, or inside the data 201.

According to an example, padding data 201 may comprise Np bytes representing a random number, or representing a patterned data such as "FF ... FF". According to an example, padding data 201 may comprises one byte representing its length, meaning the number Np. Depending on the execution context of the data, and according to an example, the composition of the padding data may be defined by a norm. In the context of encryption algorithms, according to norm ISO 10126, the last byte of the padding data represents the number Np, and the rest of the bytes of padding data represents the value FF.

A message of type of message 200 may also comprise a message authentication code (MAC) which is a result of a cryptographic operation intended for verification of the integrity of a message. According to an example, the message authentication code may be part of the padding data.

Figure 3 represents, very schematically and in block form, an embodiment of a padded message 300.

Message 300 comprises a data 301 (DD DD ... DD) representing information and a padding data 302 (XX ... XL ... XX). Such as message 200 of Figure 2, the length of message 300 is given by the number N, N being an integer, of bytes comprised in one of the blocks of bytes forming message 300 multiplied by the number of blocks forming message 300. It is defined a number Nd, Nd being an integer, of bytes of data 301 and the number Np, Np being an integer strictly greater than zero and lower of equal to number N plus one (N+1), of bytes of the padding data 302. According to an embodiment, Np is greater than one and lower of equal to number N plus one (N+1). The sum of number Nd and Np is equal to a multiple of the number N.

For message 300, having a padding data is mandatory, thus the length Np is greater than zero. If the length Nd of data 301 is equal to the target size of the message 300, padding data 302 is still present in message 300 and its length Np is equal to the target size of the message 300. In that case, message 300 has a length that is equal to twice the target size.

According to an embodiment, padding data 302 is separated into two groups of bits. A first group of bits represents a true random number, and a second part of bits represents an information relative to the length Np of the padding data 302. According to an embodiment, said information is not equal to the length Np, and is equal to the result f(Np) of the application of a function f. According to an embodiment, function f is a reversible encoding function. According to an embodiment, function f is known by both the emitter and the receiver of message 300.

According to an example, said function f is the sum of the length Np and an arbitrary integer k, also called offset k, modulo the block size represented by number N. According to an example, the value of integer k is known by both the emitter and the receiver of message 300. According to an example, the value of integer k is zero. According to another example, said information is equal to the length Np minus one, meaning integer k is equal to minus one. According to the example, when integer k is five, the number N is sixteen, and the length Np of the padding data is four, the value representing the length of said padding data is equal to nine. According to the example, when integer k is minus ten, the number N is eight, and the length Np of the padding data is three, the value representing the length of said padding data is equal to one.

According to a preferred example, the second part of bits of the padding data 302 comprises p bits, p being an integer equal to the rounding of the logarithm base two of the number N of bytes of message 300. According to an example:

- when the number N is equal to eight, the number of bits of said second part of said padding data is equal to three;
- when the number N is equal to sixteen, the number of bits of said second part of said padding data is equal to four (this example is illustrated in Figure 4);
- when the number N is equal to thirty two, the number of bits of said second part of said padding data is equal to five; and
- when the number N is equal to five hundred and twelve, the number of bits of said second part of said padding data is equal to nine, meaning more than a byte.

According to an example, the second part of bits is placed at the end of the padding data. According to a variant, the second part of bits is placed at the beginning of the padding data on inside the first part of bits. Considering said variant, in that case, the place of the second part of bits is defined by the device using the message 301.

According to an embodiment, a method for generating message 300 comprises the generation of the padding data 302 as defined above and then the addition of this padding data 302 to the data 301.

According to an embodiment, said method for generating message 300 may be used in a method for encrypting data and may be executed by an encryption device.

Furthermore, this description also concerns a method for generating the value of the second part of the padding data. According to an embodiment, this methods may comprise the following steps:

- determining the length Np of the padding data 302;
- choosing a value for the offset k;
- calculating the result of the application of function f to the length Np;
- generating p bits representing the value of the result of the calculation of the previous step.

Figure 4 represents, very schematically and in block form, an embodiment of a padded message 400. Message 400 is a practical example of the padded message 300 described in relation with Figure 3.

According to an example, padded message 400 comprises one or several blocks of sixteen bytes, and, in that case, the second part of bits of the padding data comprises four bits, which corresponds to half a byte. According to a preferred example, this second part of bits of the padding data is placed at the end of the padding data.

The use of messages comprises one or several blocks of sixteen bytes is very common, especially in encryption, ciphering and cryptography techniques. Programming an information upon four bits, meaning half a byte, helps to hide this information. When the information is equal to the number Np minus one, exactly all possible sizes of the padding data can be covered with only the four bits.

One advantage of this embodiment is that it improves the security by prevent some attacks. More particularly, one type of attack relies on triggering an invalid combination of padding data to get access to some information about the data. Several countermeasures are commonly used to overcome these types of attacks, and the majority of them uses a message authentication code. The embodiment proposed here are capable of overcoming these types of attacks without using a message authentication code, which may leak information.

An implementation example of the invention is the following:

Abstract: Oracle Absent Padding (OAP) is a padding scheme designed to be more resistant to padding and timing attacks. This padding scheme possesses unique properties and advantages compared to other known and standardized alternatives. Implementing OAP has the potential to accelerate the decryption process.

Introduction: Oracle Absent Padding (OAP) aims to enhance resistance to padding and timing attacks while retaining information about the length of the padding. Additionally, using OAP, the decryption process can be sped up because this approach allows the receiver to avoid the necessity of verifying the message authentication code [1] (MAC) before starting decryption. Existing padding schemes often require the verification of a MAC before decryption, which can be time-consuming and vulnerable to certain attacks. A MAC can even be excluded, or a similar check value could be calculated over the plaintext while still maintaining resistance to attacks such as the oracle padding attack [2].

Scope: This standard specifies a new padding scheme for block cipher algorithms like AES [3] and RSA [4] used in cryptographic applications. The purpose of this padding scheme is to ensure that plaintext data is properly aligned to the block size required by the cipher, while providing robust security properties and maintaining the length of the padding data. This padding scheme is aimed to enhance security in every algorithm that requires the input parameters to have a length that is a power of 2.

Backgroung: ORACLE PADDING ATTACK: An oracle padding attack is a type of cryptographic attack where the attacker exploits the padding validation of a block cipher in cipher block chaining (CBC) [5] mode. The attacker tries to trigger an error by altering the initialization vector (IV), the IV will directly impact the plaintext in a predictable matter, as it is XORed right before we get the plaintext with the padding attached. The attack relies on that the system reveals whether the padding is correct or incorrect, by either time taken, or a (different) error response. By analyzing this data, the attacker can gradually reveal parts of the plaintext without knowing the decryption key. This attack is particularly effective against systems that use padding schemes like PKCS#7 [6], where the padding validation process leaks the entire plaintext. It won't matter if the system only accepts a message with a certain length, as the attack exploits invalid padding structure errors rather than invalid message length errors.

*A message encrypted with PKCS#7 padding used:*

Example of text padded with PKCS#7 (Y = message): YY YY YY YY YY YY YY YY YY 07 07 07 07 07 07 07

The attack relies on that all the padding bytes are the same and have a known value depending on the length of the padding.

1. Select a Ciphertext Block: Take one ciphertext block you want to attack.

2. Alter IV: Altering the IV (Initialization Vector) of the messages will directly alter the plaintext. Increment the IV until the system indicates that the padding is valid again). To begin the attack by incrementing the last byte of the IV.

3. Verify Padding: Ones the padding is valid again verify that the last byte of the plaintext is 0x01, do this by alter the second-to-last byte of the IV to another value to ensure that you did not accidentally find another valid value apart from 0x01. If, after altering the second-to-last byte of the IV, the system still accepts the message, we can be confident that the last byte of the plaintext is 0x01.

4. Determine Intermediate Plaintext Byte: Change the IV so that the last byte of the plaintext will be 0x00 (flip the last bit in this case). This altered IV byte will contain the same value as the intermediate plaintext block because if $X \oplus Y = 0$, then $X = Y$.

5. Prepare IV for Next Byte: To calculate the subsequent bytes of the intermediate plaintext block, first modify the IV such that all bytes following the bytes that are being manipulating remain valid. For instance, to calculate the second-to-last byte of the intermediate plaintext block, the last byte of the plaintext needs to be 0x02. This is easily done as you already know the corresponding byte of the intermediate plaintext block, it is calculated by XORing the intermediate plaintext byte with the desired value in the plaintext.

6. Determine Intermediate Plaintext Block: Repeat steps 2, 4, and 5 for each byte in the IV (up to a padding length of 0x10) to determine the full intermediate plaintext block.

7. Reveal Plaintext: XORing the calculated intermediate plaintext block with the original IV will reveal the whole plaintext.

*A message encrypted with ISO10126 [6] padding used:*

Example of text padded with ISO10126 (Y = message, R = Random bites) : YY YY YY YY YY YY YY YY YY RR RR RR RR RR RR 07

The attack relies on that the second last nibble of the plaintext must always be 0b0000.

1. Select a Ciphertext Block: Choose one ciphertext block to attack, but it may not be the last.

2. Alter the IV: As the IV directly changes the plaintext, we can alter the second last nibble of the IV so that the second last nibble of the plaintext will become 0b0000, when this occurs the system will accept the message.

3. Determine intermediate plaintext: The second last nibble of the altered IV will be the same value as the second last nibble of the intermediate plaintext block because if $X \oplus Y = 0$, then $X = Y$.

4. Reveal plaintext: XORing the second last nibble of the intermediate plaintext block with the original IV will now reveal the value of the plaintext.

Definitions:

- Message: The important data to be passed over.
- Block size: The fixed length of data that is processed as a single unit by a block cipher. A common block size is 16 bytes.
- Padding Scheme: A padding scheme is a practice used to lengthen the message until the data reaches a multiple of the block size.
- Message Authentication Code (MAC): A short piece of information added used to authenticate a message and ensure its integrity and authenticity of any data transmitted.
- Cypher: A publicly known encrypted set of bytes devisable by the block size that is input into a decryption algorithm or the output of an encryption algorithm.
- Intermediate plaintext: The partially decrypted data that is produced during the decryption process before the final plaintext is obtained.
- IV: A random or pseudo-random value used in combination with a secret key to ensure that the same plaintext will encrypt to different ciphertexts each time, enhancing security.
- Plaintext: The original, unencrypted data that is input into an encryption algorithm or the output of a decryption algorithm. This includes the message and padding.
- Nibble: A nibble is a unit of digital information that consists of 4 bits, or half of an 8-bit byte. It can represent 16 different values, ranging from 0 to 15 in decimal, or 0 to F in hexadecimal notation.

Embodiment: This section describes the method for generating a message that is divisible by the data block size (a padded message). The message comprises two groups of bytes that follow each other sequentially: the first group of bytes (Y) is the data to be transmitted, and the second group of bytes (P) is the padding data. The length of P is calculated as the block size (B) minus the remainder of the length of Y when divided the block size. If this value is 0, the length of P is set to the block size instead.

The padding data consists of two groups of bits that follow each other sequentially. The second group of bits (V) has a length equal to the logarithm base 2 of the block size (commonly 16). If this is not an integer, it should be rounded up to the nearest integer, but doing so will cause it to lose some its resistant properties. The value of V contains the length of P in bytes modulo the length of the block size. The first group of bits (R), with a length of the length of P in bits minus the length of V in bits, consists of randomly generated bits.

The message data can be calculated using following formula, where |X| denotes the length in bytes of a message X, |X|_"b" denotes the length in bits of same message, and X" ‖ " Y denotes the concatenation of two messages X and Y:

$|B| = 2^n$ where $n \in \mathbb{N}$

$$|P| = \begin{cases} |B| - (|Y| \bmod |B|) & \text{if } |B| - (|Y| \bmod |B|) > 0 \\ |B| & \text{otherwise} \end{cases}$$

$$V = a \text{ } n\text{-bit integer equal to } |P| - 1$$

$$R = a \text{ string of } (8|P| - n) \text{ random bits}$$

$$P = R \parallel V$$

$$X = Y \parallel P$$

Resistance Property: When the maximum possible length of padding (equal to the length of the block) is a power of 2, it can be encoded using exactly the logarithm base 2 of the block length in bits. If this is not the case, the padding scheme loses some its resistant properties. The resistance property of the padding scheme relies on the decrypted message's inability to contain an invalid padding structure. This means that if an attacker were able to alter the initialization vector (IV) and thereby modify the padding structure of the plaintext, the decryption process would not return an error indicating an invalid padding structure, thus not providing an oracle to the attacker. This oracle can also potentially manifest as a timing difference during the decryption of the message. The padding has this property because the first part of the padding is a random number, and a change here cannot affect the decryption algorithm. Additionally, a change in the second part of the padding will merely alter the padding length to a value that is accepted. This is because the minimum and maximum values an attacker could set are exactly within the limits of the accepted values.

Use case:

*Generic decryption without MAC*

If the user decides to encrypt a message without adding a MAC because the message integrity is not a necessity or adds no additional value, an example of this would be transporting a random number. This padding scheme protects such message against oracle padding attack even without using a MAC.

*Generic decryption with MAC*

A common practice to prevent the padding oracle attack is to add a MAC to the message. This MAC ensures the integrity of the ciphertext and IV. This will prevent the system from decrypting data with an IV that has been altered, rendering the padding oracle attack ineffective. In this method, the user needs to verify the MAC before starting decryption. This is done because starting to decrypt an altered message could potentially provide an oracle for the attacker. Using a padding scheme that is inherently resistant to the padding oracle attack gives the user the option to start decryption first or in parallel with the verification of the MAC. which gives a performance advantage (such as reduced latency).

*MAC over plaintext*

In the case where the MAC needs to be calculated over a part of the plaintext, there is a need to decrypt the message before we can verify its integrity. We would still be resistant to the padding oracle attack provided the user uses a padding scheme that is inherently resistant to the padding oracle attack.

Conclusion:

Comparing this padding scheme to other well-known solutions, I concluded that there is no padding scheme that provides inherent protection against padding attacks while retaining the length of the padded bytes. However, OAP could provide inherent protection and retain the length of the padding if the block size is a power of 2. With this inherent protection, the padding scheme could offer the opportunity to speed up certain processes or enable certain configurations. In the case where a system already has countermeasures in place, like a MAC to protect against certain attacks, I am still convinced that the use of OAP could provide enhanced security and offer additional safety layers against padding attacks.

Appendix:

Below you will find some examples deploying AOP.

Blocks are separated by '|', and each character or number represents 4 bits. Here, Y represents data, R represents a random value, and the integer (0 ☐ F) represents the value of the bits that will be the length of the padding modulo the length of the block size in bytes, earlier mentioned as V.

A message of 9 bytes using a block size of 16 bytes will have the following structure after the padding is applied:

| YY YY YY YY YY YY YY YY YY RR RR RR RR RR RR R7 |

A message of 19 bytes using a block size of 16 bytes will have the following structure after the padding is applied:

| YY YY YY YY YY YY YY YY YY YY YY YY YY YY YY YY | YY YY YY RR RR RR RR RR RR RR RR RR RR RR RR RD |

A message of 16 bytes using a block size of 16 bytes will have the following structure after the padding is applied:

| YY YY YY YY YY YY YY YY YY YY YY YY YY YY YY YY | RR RR RR RR RR RR RR RR RR RR RR RR RR RR RR R0 |

A message of 14 bytes using a block size of 32 bytes will have the following structure after the padding is applied:

| YY YY YY YY YY YY YY YY YY YY YY YY YY YY RR RR RR RR RR RR RR RR RR RR RR RR RR RR RR RR RR XX |

Where XX (8 bits) will have the following structure whit each character or number represents 1 bit: "RRR1 0010"

References:

[1] Krawczyk, H., & Bellare, M. (1996). HMAC: Keyed-Hashing for Message Authentication. RFC 2104. https://doi.org/10.17487/rfc2104

[2] Vaudenay, S. (2002). Security flaws induced by CBC padding - Applications to SSL, IPSEC, WTLS.... In Advances in Cryptology - EUROCRYPT 2002 (pp. 534-545). Springer, Berlin, Heidelberg. https://doi.org/10.1007/3-540-46035-7_35.

[3] National Institute of Standards and Technology (NIST). "FIPS PUB 197: Advanced Encryption Standard (AES)." 2001. 2. Rivest,

[4] R. L., Shamir, A., & Adleman, L. "A Method for Obtaining Digital Signatures and Public-Key Cryptosystems." Communications of the ACM, 21(2), 120-126, 1978.

[5] National Institute of Standards and Technology (NIST). "Recommendation for Block Cipher Modes of Operation: Methods and Techniques." NIST Special Publication 800-38A, December 2001.

[6] Kaliski, B. "PKCS #7: Cryptographic Message Syntax Version 1.5." RFC 2315, March 1998. https://tools.ietf.org/html/rfc2315.

[7] International Organization for Standardization (ISO). "ISO/IEC 10126-2:1991: Information technology - Security techniques - Modes of operation for an n-bit block cipher algorithm. Part 2: Padding methods." 1991.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

**Claims**

1.  Method for generating a message (300; 400) formed by one or several blocks of a first number (N) of bytes, said message (300; 400) comprising a first group of bytes (301; 401) comprising data of said message (300; 400) and a second group of bytes (302; 402) corresponding to a padding data (302; 402) of said message (300; 400), wherein said padding data (302; 402) comprises a first part of bits representing a random number and a second part of bits representing a result of the application of a function to the first length (Np), wherein a second length (p) of said second part of said padding data (302; 402) is equal to the rounding of the logarithm base two of said first number (N).

2.  Electronic device capable of generating a message (300; 400) comprising a first group of bytes (301; 401) comprising data of said message (300; 400) and a second group of bytes (302; 402) corresponding to a padding data (302; 402) of said message (300; 400), wherein said padding data (302; 402) comprises a first part of bits representing a random number and a second part of bits representing a result of the application of a function to the first length (Np), wherein a second length (p) of said second part of said padding data (302; 402) is equal to the rounding of the logarithm base two of said first number (N).

3. Method according to claim 1, or device according to claim 2, wherein the second part of bits is placed at the end of the padding data (302; 402).

4. Method according to claim 1 or 3, or device according to claim 2 or 3, wherein said first number (N) is a power of two.

5. Method or device according to claim 4, wherein, when said first number (N) is equal to eight, said second length (p) of said second part of said padding data (302; 402) is equal to three.

6. Method or device according to claim 4, wherein, when said first number (N) is equal to sixteen, said second length (p) of said second part of said padding data (302; 402) is equal to four.

7. Method or device according to claim 4, wherein, when said first number (N) is equal to thirty-two, said second length (p) of said second part of said padding data (302; 402) is equal to five.

8. Method according to any of claims 1, 3 to 7, or device according to any of claims 2 to 7, wherein the padding data (302; 402) is placed at the end of said message.

9. Method according to any of claims 1, 3 to 8, or device according to any of claims 2 to 8, wherein said function is the sum of the first length (Np) of said padding data (302; 402) and of an integer (k) modulo the first number (N) .

10. Method or device according to claim 9, wherein said integer (k) is equal to zero.

11. Method or device according to claim 9, wherein said integer (k) is equal to minus one.

12. A method for generating said second part of bits of said padding data according to any of claims 1, 3 to 11.

13. A computer program product comprising instructions which, when the program is executed by a computer, cause the computer to execute the method according to any of claims 1, 3 to 11 or the method according to claim 12.

14. Encryption method comprising the method according to any of claims 1, 3 to 11 or the method according to claim 12.

15. Encryption device comprising the device according to any of claims 2 to 11.

100    101         102         103

| CPU | MEM | SE |

107

| IN/OUT | FCT1 | FCT2 |

104         105         106

**Fig. 1**

200

201                                          202

| DD DD ... DD | XX XX ... XX |

**Fig. 2**

300

301                                          302

| DD DD ... DD | XX ... XL ... XX |

**Fig. 3**

400

401                                          402

| DD DD ... DD | XX ... XL |

**Fig. 4**

## EUROPEAN SEARCH REPORT

**Application Number**

EP 25 20 7862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/052869 A1 (IBM [US]; IBM ISRAEL SCIENCE AND TECH LTD [IL] ET AL.) 6 April 2023 (2023-04-06) * paragraphs [0012], [0025], [0028]; figure 2 * ----- | 1-15 | INV. H04L9/06 |
| X | WO 2014/043392 A1 (QUALCOMM INC [US]) 20 March 2014 (2014-03-20) * columns 34,51; figures 3,10 * ----- | 1-15 | |
| A | WO 2011/097702 A1 (CERTICOM CORP [CA]; STRUIK MARINUS) 18 August 2011 (2011-08-18) * paragraphs [0076] - [0101]; figures 3-7 * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 20 February 2026 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 7862

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | Publication date | Patent family member(s) | Publication date |
|---|---|---|---|
| WO 2023052869 A1 | 06-04-2023 | DE 112022003785 T5 | 06-06-2024 |
| | | GB 2626270 A | 17-07-2024 |
| | | JP 2024535980 A | 04-10-2024 |
| | | US 2023111001 A1 | 13-04-2023 |
| | | WO 2023052869 A1 | 06-04-2023 |
| WO 2014043392 A1 | 20-03-2014 | CN 104620555 A | 13-05-2015 |
| | | EP 2896179 A1 | 22-07-2015 |
| | | EP 3001641 A1 | 30-03-2016 |
| | | EP 3001642 A1 | 30-03-2016 |
| | | JP 2015528681 A | 28-09-2015 |
| | | KR 20150058310 A | 28-05-2015 |
| | | US 2014079213 A1 | 20-03-2014 |
| | | US 2015188708 A1 | 02-07-2015 |
| | | US 2015188709 A1 | 02-07-2015 |
| | | WO 2014043392 A1 | 20-03-2014 |
| WO 2011097702 A1 | 18-08-2011 | CA 2788697 A1 | 18-08-2011 |
| | | CN 102754399 A | 24-10-2012 |
| | | EP 2355399 A1 | 10-08-2011 |
| | | EP 3340528 A1 | 27-06-2018 |
| | | EP 3664357 A1 | 10-06-2020 |
| | | HK 1257306 A1 | 18-10-2019 |
| | | US 2011222683 A1 | 15-09-2011 |
| | | WO 2011097702 A1 | 18-08-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KRAWCZYK, H.** ; **BELLARE, M.** HMAC: Keyed-Hashing for Message Authentication. *RFC 2104*, 1996, https://doi.org/10.17487/rfc2104
- Security flaws induced by CBC padding - Applications to SSL, IPSEC, WTLS. **VAUDENAY, S.** In Advances in Cryptology - EUROCRYPT. Springer, 2002, 534-545
- National Institute of Standards and Technology (NIST). *FIPS PUB 197: Advanced Encryption Standard (AES).*, 2001, vol. 2
- **R. L.** ; **SHAMIR, A.** ; **ADLEMAN, L.** A Method for Obtaining Digital Signatures and Public-Key Cryptosystems.. *Communications of the ACM*, 1978, vol. 21 (2), 120-126
- Recommendation for Block Cipher Modes of Operation: Methods and Techniques.. *National Institute of Standards and Technology (NIST)*, December 2001
- **KALISKI, B.** PKCS #7: Cryptographic Message Syntax Version 1.5.. *RFC 2315*, March 1998, https://tools.ietf.org/html/rfc2315
- ISO/IEC 10126-2:1991: Information technology - Security techniques - Modes of operation for an n-bit block cipher algorithm. Part 2: Padding methods. *International Organization for Standardization (ISO)*, 1991